# EUROPEAN PATENT APPLICATION

(11) **EP 4 495 769 A1**
(43) Date of publication of application: **22.01.2025**
(21) Application number: 24181910.1
(22) Date of filing: 13.06.2024
(51) Int. Cl.: G06F 9/48

(54) **COMPUTER PROGRAM, JOB SCHEDULING METHOD, AND INFORMATION PROCESSING APPARATUS**

(30) Priority: 20.07.2023 JP 2023117957
(71) Applicant: FUJITSU LIMITED, Kawasaki-shi, Kanagawa 211-8588 (JP)
(72) Inventor: KOBAYASHI, Hiroyuki, Kawasaki-shi, 211-8588 (JP)
(74) Representative: Haseltine Lake Kempner LLP

(57) **Abstract**

A computer identifies an update job of updating a control software and two or more user jobs each with specification of the number of used nodes and an expected execution time. The computer plans a schedule of the update job and two or more user jobs so as to reduce the total waiting time of the two or more user jobs, on the basis of the number of used nodes and expected execution time in such a manner that each of the two or more user jobs is assigned to one or more nodes with the same version of the control software. The computer controls the order of execution of the update job and two or more user jobs according to the planned schedule.

## Description

### FIELD

The embodiments discussed herein relate to a computer program, a job scheduling method, and an information processing apparatus.

### BACKGROUND

One form of information processing system is a parallel processing system that includes a plurality of nodes capable of executing threads in parallel. The parallel processing system may be designed to accept, from a user, a user job with specification of the number of nodes to use, and assign the specified number of available nodes to execute the user job. If the specified number of nodes are not available, the parallel processing system registers the user job in an execution waiting queue and waits until the specified number of nodes are available. In view of the waiting time of the user job, the utilization efficiency of the nodes, and others, the parallel processing system allocates a plurality of user jobs to the nodes according to an appropriate scheduling algorithm.

In this connection, a patch application method has been proposed, which applies a patch to the operating system (OS) of each computer in a time period during which the computer is under low load and which does not overlap with the time periods used for the other computers. Further, a software modification management apparatus has been proposed, which selects, from a plurality of nodes, a certain number of idle nodes that have a yet-to-be-updated software and are not executing any job, and updates the software on the selected idle nodes.

Still further, a patch application method has been proposed, in which a thread that runs in kernel mode checks a patch flag in response to a certain function being called, and when the patch flag has a specified value, jumps to a patch module. Yet still further, a dynamically patching method has been proposed, which detects kernel threads that use a to-be-patched function and determines when the function becomes free. Japanese Laid-open Patent Publication No. 2003-15894 International Publication Pamphlet No. WO 2008/126221 U.S. Patent Application Publication NO. 2015/0178071 U.S. Patent Application Publication NO. 2017/0010879

The parallel processing system may execute an update job of updating a control software such as an OS or middleware on each of the plurality of nodes. Since the nodes complete their currently executing user jobs at different times, the parallel processing system may allow the initiation of the update job on different nodes at different times.

If, however, the update job starts on different nodes at different times, the update job on some nodes may cause a long delay in the execution of user jobs registered after the update job in the parallel processing system.

### SUMMARY

According to one aspect, the present disclosure intends to reduce the waiting times of user jobs.

According to one aspect, there is provided a computer program that causes a computer to perform a process including: identifying, in a plurality of execution waiting jobs, an update job of updating a control software of a target node among a plurality of nodes and two or more user jobs each with specification of a number of used nodes and an expected execution time, the number of used nodes indicating how many nodes are used among the plurality of nodes; planning a schedule of the update job and the two or more user jobs so as to reduce a total waiting time of the two or more user jobs, based on the number of used nodes and the expected execution time in such a manner that each of the two or more user jobs is assigned to one or more nodes that are available and have an identical version of the control software among the plurality of nodes; and controlling an order of execution of the update job and the two or more user jobs according to the planned schedule.

### BRIEF DESCRIPTION OF DRAWINGS

FIG. 1 is a view for describing an information processing apparatus according to a first embodiment;
FIG. 2 illustrates an example of an information processing system according to a second embodiment;
FIG. 3 is a block diagram illustrating an example of the hardware configuration of a scheduler;
FIG. 4 is a block diagram illustrating an example of the functional configuration of the scheduler;
FIG. 5 is a block diagram illustrating an example of the functional configuration of a patching server;
FIG. 6 illustrates a first job scheduling example;
FIG. 7 illustrates a second job scheduling example;
FIG. 8 illustrates an example of a job table;
FIG. 9 illustrates an example of a node table;
FIG. 10 illustrates an example of a schedule planning table for a first job;
FIG. 11 illustrates examples of the schedule planning table for a subsequent job;
FIG. 12 illustrates a third job scheduling example;
FIG. 13 illustrates a fourth job scheduling example;
FIG. 14 illustrates a fifth job scheduling example;
FIG. 15 illustrates a sixth job scheduling example;
FIG. 16 illustrates a seventh job scheduling example;
FIG. 17 illustrates an eighth job scheduling example;
FIG. 18 is a flowchart illustrating an example procedure for patch job creation;
FIG. 19 is a flowchart illustrating an example procedure for job acceptance;
FIG. 20 is a flowchart illustrating an example procedure for job scheduling; and
FIG. 21 is a continuation of the flowchart illustrating the example procedure for the job scheduling.

### DESCRIPTION OF EMBODIMENTS

Hereinafter, embodiments will be described with reference to the accompanying drawings.

### First Embodiment

A first embodiment will be described.

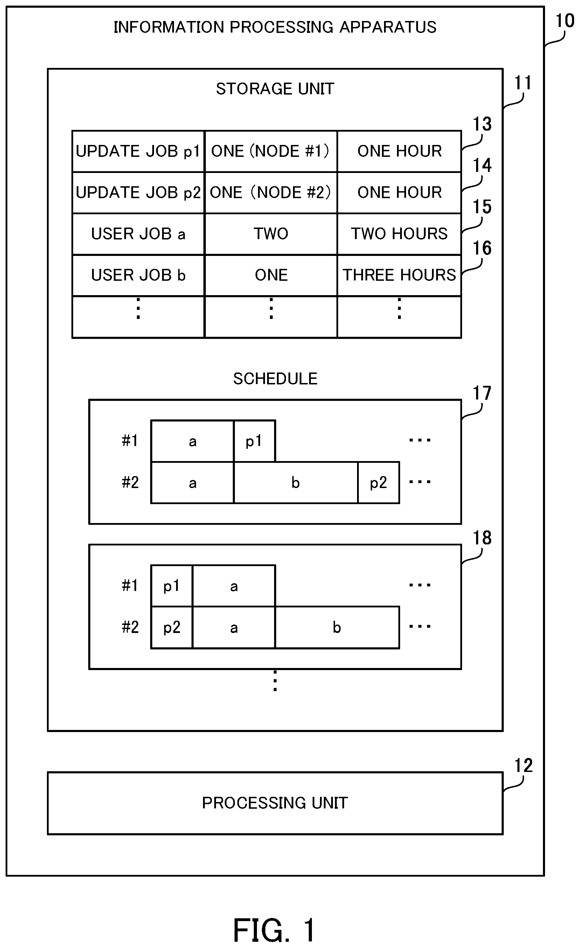

FIG. 1 is a view for describing an information processing apparatus according to a first embodiment.

In a parallel processing system including a plurality of nodes, the information processing apparatus 10 of the first embodiment performs job scheduling to assign jobs to available nodes. The information processing apparatus 10 may be a client device or a server device. The information processing apparatus 10 may be called a computer or a job scheduler.

The information processing apparatus 10 includes a storage unit 11 and a processing unit 12. The storage unit 11 may be a volatile semiconductor memory, such as a random access memory (RAM), or a non-volatile storage device, such as a hard disk drive (HDD) or a flash memory.

For example, the processing unit 12 is a processor such as a central processing unit (CPU), a graphics processing unit (GPU), or a digital signal processor (DSP). The processing unit 12 may include an application specific integrated circuit (ASIC), a field programmable gate array (FPGA), or another electronic circuit. For example, the processor executes programs stored in a memory such as a RAM (e.g. storage unit 11). A set of processors may be called a multiprocessor or simply a "processor."

The storage unit 11 stores job information indicating a plurality of execution waiting jobs. The job information may be stored in an execution waiting queue. The plurality of execution waiting jobs include one or more update jobs and two or more user jobs. For example, the one or more update jobs include update jobs 13 and 14, and the two or more user jobs include user jobs 15 and 16. The jobs are registered in the order of the update job 13, update job 14, user job 15, and user job 16 in the information processing apparatus 10.

An update job is to update a control software of a target node among the plurality of nodes. The update job may be called a patch job. The update job may be to replace a program included in the control software. The update job may be to strengthen the security of the control software or to expand the functions of the control software. The execution of the update job upgrades the version of the control software of the target node. The control software is an infrastructure software for running application software. Examples of the control software include an operating system and middleware. The "version" is an attribute identifying an updated copy of the control software and may be called an edition or a revision.

A user job is a job that is executed in response to a request from a user. The user job is executed using the control software. The user job may include a user program created by a user. For the user job, the number of used nodes and an expected execution time are specified. The number of used nodes indicates how many nodes are used in parallel for the user job. The expected execution time is an estimate of the processing time from the start to the completion of the user job. The number of used nodes and expected execution time may be specified by the user. In addition, the expected execution time may be estimated on the basis of past similar user jobs by the information processing apparatus 10.

Here, since different jobs that are running on different nodes may be completed at different times, the nodes may become available at different times. For this reason, the information processing apparatus 10 does not enforce simultaneous execution of update jobs on all nodes, but allows the update jobs to be executed on different nodes at different times. Note that different versions of the control software may exhibit different behaviors. Therefore, in the case where a user job uses two or more nodes, the information processing apparatus 10 assigns the user job to nodes with the same version of the control software. Such two or more nodes with the same version are either nodes none of which has executed the update jobs or nodes all of which have executed the update jobs.

The processing unit 12 plans a schedule of the update jobs and the two or more user jobs on the basis of the numbers of used nodes and expected execution times of the two or more user jobs. At this time, the processing unit 12 plans the schedule that satisfies the constraint that available nodes to be assigned to the same user job need to have the same version of the control software at the start time of the user job.

The processing unit 12 may assign the two or more user jobs to available nodes, preferentially in the order of registration of the two or more user jobs in the information processing apparatus 10. In addition, even in the case where an update job is registered earlier than a user job in the information processing apparatus 10, the processing unit 12 may prioritize the execution of the user job while delaying the update job. Note that, in order to secure nodes with the same version, the processing unit 12 may determine to execute the update job before the user job. Delaying the update job may sometimes reduce the waiting times of the two or more user jobs, and executing the update job first may result in a reduction in the waiting times of the two or more user jobs.

For example, for a first user job, the processing unit 12 computes a plurality of first patterns that are able to secure as many available nodes with the same version as the specified number of used nodes. Each of the plurality of first patterns indicates nodes to be assigned to the first user job and the start time of the first user job. The plurality of first patterns may include a pattern that executes the first user job first while delaying the update jobs, and a pattern that executes the update jobs first and then the first user job.

After that, for a second user job, the processing unit 12 computes one or more second patterns that are able to secure as many available nodes with the same version as the specified number of used nodes. The one or more second patterns are computed for each of the plurality of first patterns. As a schedule following a certain first pattern, the processing unit 12 computes the second patterns that are each able to assign the second user job to available nodes, taking into account the expected execution time of the first user job. Each of the one or more second patterns indicates nodes to be assigned to the second user job and the start time of the second user job.

In the case where an update job is not executed in a first pattern, then the one or more second patterns may include a pattern that executes the second user job first while further delaying the update job, and a pattern that executes the update job first and then the second user job. In the manner as described above, for example, the processing unit 12 plans schedules including schedules 17 and 18. The schedule 17 executes the user job 15, executes the update job 13 and user job 16 after the user job 15, and then executes the update job 14 after the user job 16. The schedule 18 executes the update jobs 13 and 14, executes the user job 15 after the update jobs 13 and 14, and then executes the user job 16 after the user job 15.

The processing unit 12 calculates the total waiting time of the two or more user jobs for each schedule. A waiting time is the length of time that passes from the current time or a reference time to a scheduled start time. The processing unit 12 may calculate an average waiting time by dividing the total waiting time by the number of user jobs. The processing unit 12 searches for a schedule so as to reduce the total waiting time. For example, the processing unit 12 selects a schedule with the minimum total waiting time or the minimum average waiting time from the plurality of planned schedules. The processing unit 12 then controls the order of execution of the update jobs and two or more user jobs according to the selected schedule.

For example, the processing unit 12 determines when to execute the update jobs during the execution of the two or more user jobs. The processing unit 12 may instruct the plurality of nodes to execute the update jobs and two or more user jobs according to the selected schedule. In addition, the processing unit 12 may store the selected schedule in a non-volatile storage device, display it on a display device, or send it to another information processing apparatus.

As described above, the information processing apparatus 10 of the first embodiment identifies, in the execution waiting jobs, update jobs of updating the control software of target nodes and two or more user jobs each with specification of the number of used nodes and expected execution time. The information processing apparatus 10 plans a schedule of the update jobs and two or more user jobs on the basis of the numbers of used nodes and expected execution times of the user jobs in such a manner that each user job is assigned to available nodes with the same version of the control software. At this time, the information processing apparatus 10 plans the schedule so as to reduce the total waiting time of the two or more user jobs. The information processing apparatus 10 controls the order of execution of the update jobs and two or more user jobs according to the planned schedule.

With the above approach, the information processing apparatus 10 allows the update jobs to be executed on the nodes at different times. As compared with the case of temporarily suspending the operation of the parallel processing system and executing the update jobs on all nodes simultaneously, the availability of the parallel processing system is improved. In addition, since the same user job is assigned to nodes with the same version of the control software, the accurate computation result of each user job is guaranteed.

In addition, even in the case where an update job is registered earlier than a user job, there is a possibility that the update job is delayed and the user job is executed first. This case suppresses a delay in the execution of the user job registered after the update job, compared with the case where the jobs are simply executed in order of registration. Further, the information processing apparatus 10 selects a schedule with the minimum total waiting time of the two or more user jobs. Therefore, as compared with the case of taking into account only the waiting time of one user job immediately after the update job, the average waiting time of the user jobs is reduced and the fairness among the two or more user jobs waiting for execution is improved. For example, the information processing apparatus 10 is able to reduce the risk that minimizing the waiting time of the user job immediately after the update job ends up increasing the waiting times of its subsequent user jobs.

In this connection, the update jobs may be jobs placed at the top of the execution waiting queue, and the two or more user jobs may be jobs placed after the update jobs in the execution waiting queue. This reduces the inefficiency caused by simply executing the jobs in order of registration. In addition, the plurality of planned schedules may include a schedule that executes the update jobs before the user jobs and a schedule that executes at least one of the user jobs before the update jobs. Therefore, the information processing apparatus 10 is able to select a schedule with the minimum total waiting time from the schedules that define different execution timing for the update jobs.

In addition, the information processing apparatus 10 may compute a plurality of first patterns that each assign a first user job to as many available nodes with the same version as the specified number of used nodes. Then, for each first pattern, the information processing apparatus 10 may compute second patterns that each assign a second user job to as many available nodes with the same version as the specified number of used nodes. By doing so, various schedules that assign the two or more user jobs to available nodes are planned in keeping with the order of priority of the two or more user jobs.

### Second Embodiment

A second embodiment will be described.

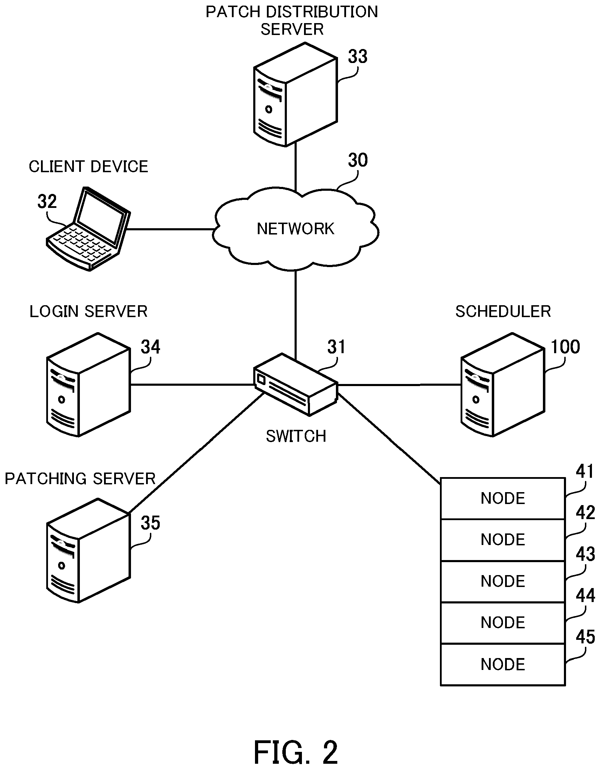

FIG. 2 illustrates an example of an information processing system according to the second embodiment.

The information processing system of the second embodiment includes a switch 31, a client device 32, a patch distribution server 33, a login server 34, a patching server 35, a plurality of nodes including nodes 41 to 45, and a scheduler 100.

The switch 31, client device 32, and patch distribution server 33 are connected to a network 30. For example, the network 30 is a wide-area data communication network, such as the Internet. The login server 34, patching server 35, nodes 41 to 45, and scheduler 100 are connected to the switch 31. The switch 31 is a wired communication device included in a local area network (LAN). The switch 31 transfers packets. The scheduler 100 corresponds to the information processing apparatus 10 of the first embodiment.

The client device 32 is a client computer that a user of the information processing system uses. The client device 32 logs in the login server 34 via the network 30. The client device 32 uses the login server 34 to create a user job request specifying a user program, the number of used nodes, and a maximum execution time.

The patch distribution server 33 is a server computer that distributes a patch for an OS. The patch may sometimes be called an update program or an update module. The patch distribution server 33 accepts an access over the network 30. In response to the access, the patch distribution server 33 sends a patch itself and specification information such as the version of the patch and application requirements for the patch.

The login server 34 is a frontend server computer that accepts user access. The login server 34 authenticates the client device 32. When the authentication is successful, then the login server 34 receives the specification of a user program, the number of used nodes, a maximum execution time, and others from the client device 32. The login server 34 creates a user job request on the basis of these specifications and sends the user job request to the scheduler 100.

The patching server 35 is a server computer that applies a new patch to the nodes 41 to 45. Note that the information processing system may include a client computer that an administrator uses, in place of the patching server 35. In addition, the functions of the patching server 35 may be incorporated into the scheduler 100.

The patching server 35 periodically accesses the patch distribution server 33 to determine whether a new patch has been distributed. When determining that the new patch has been distributed, the patching server 35 determines whether each node 41 to 45 satisfies the application requirements for the new patch. The patching server 35 creates a patch job request to apply the patch to a node satisfying the application requirements and sends the patch job request to the scheduler 100. Note that the patch job request is created for each node.

The nodes 41 to 45 are server computers that execute specified programs. The nodes 41 to 45 may be called computing nodes. An OS has been installed on the nodes 41 to 45. The same user job or different user jobs may be assigned to the nodes 41 to 45. Two or more user jobs are not assigned to the same node simultaneously. In addition, patch jobs may be assigned to the nodes 41 to 45. In the case where a node is executing a patch job, any user job is not assigned to the node until the patch job is complete.

The scheduler 100 is a server computer that performs job scheduling to allocate a plurality of jobs to the nodes 41 to 45. The scheduler 100 receives a user job request from the login server 34 and registers the user job at the end of a waiting job list. The scheduler 100 also receives a patch job request from the patching server 35 and registers the patch job at the end of the waiting job list.

The scheduler 100 monitors the job execution status of the nodes 41 to 45. In principle, the scheduler 100 assigns each job to one or more nodes, preferentially in order from the top of the waiting job list, that is, in order of arrival. In the case where a user job is placed at the top, the scheduler 100 assigns the user job to as many available nodes as the specified number of used nodes when the number of available nodes becomes greater than or equal to the number of used nodes. Note that the same user job is not allowed to be assigned to nodes with different versions of the OS. Therefore, nodes that are assigned to a user job are either nodes none of which has been patched or nodes all of which have been patched.

In the case where a patch job is placed at the top, on the other hand, the scheduler 100 causes its patch application target node to execute the patch job when the patch application target node is available. Note, however, that the scheduler 100 may determine to temporarily delay the patch job and first execute a user job that has arrived after the patch job, as will be described later.

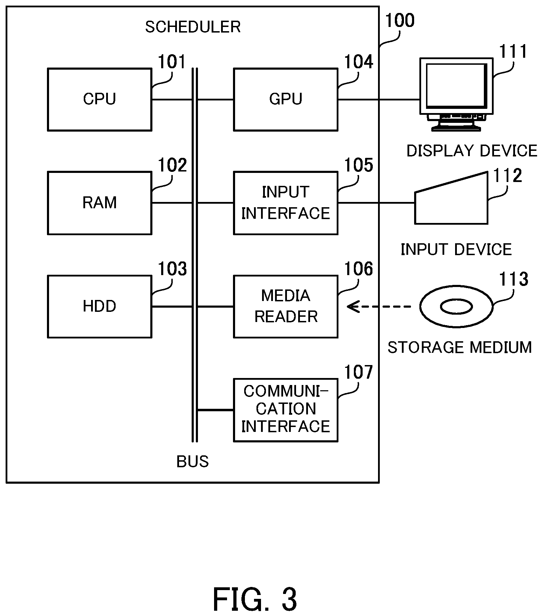

FIG. 3 is a block diagram illustrating an example of the hardware configuration of the scheduler.

The scheduler 100 includes a CPU 101, a RAM 102, an HDD 103, a GPU 104, an input interface 105, a media reader 106, and a communication interface 107, which are connected to a bus. The CPU 101 corresponds to the processing unit 12 of the first embodiment. The RAM 102 or HDD 103 corresponds to the storage unit 11 of the first embodiment. The client device 32, patch distribution server 33, login server 34, patching server 35, and nodes 41 to 45 each may have the same hardware configuration as the scheduler 100.

The CPU 101 is a processor that executes program commands. The CPU 101 loads a program and data from the HDD 103 to the RAM 102 and executes the program. The scheduler 100 may be provided with a plurality of processors.

The RAM 102 is a volatile semiconductor memory that temporarily stores a program that is executed by the CPU 101 and data that is used by the CPU 101 in processing. The scheduler 100 may be provided with a different type of volatile memory than RAM.

The HDD 103 is a non-volatile storage device that stores software programs and other data. The software includes an OS, middleware, application software, and others. The scheduler 100 may be provided with another type of non-volatile storage device such as a flash memory or a solid state drive (SSD).

The GPU 104 performs image processing in collaboration with the CPU 101 and outputs images to a display device 111 connected to the scheduler 100. Examples of the display device 111 include a cathode ray tube (CRT) display, a liquid crystal display, an organic electro luminescence (EL) display, and a projector. Another type of output device such as a printer may also be connected to the scheduler 100.

In addition, the GPU 104 may be used as a general-purpose computing on graphics processing unit (GPGPU). The GPU 104 is able to execute a program in accordance with commands from the CPU 101. The scheduler 100 may be provided with a volatile semiconductor memory other than the RAM 102 as a GPU memory.

The input interface 105 receives an input signal from an input device 112 connected to the scheduler 100. Examples of the input device 112 include a mouse, a touch panel, and a keyboard. Plural types of input devices may be connected to the scheduler 100.

The media reader 106 is a reading device that reads a program and data from a storage medium 113. Examples of the storage medium 113 include a magnetic disk, an optical disc, and a semiconductor memory. Magnetic disks include flexible disks (FDs) and HDDs. Optical discs include compact discs (CDs) and digital versatile discs (DVDs). The media reader 106 copies a program and data from the storage medium 113 to another storage medium such as the RAM 102 or the HDD 103. The read program may be executed by the CPU 101.

The storage medium 113 may be a portable storage medium. The storage medium 113 may be used to distribute a program and data. In addition, the storage medium 113 and HDD 103 may be referred to as computer-readable storage media.

The communication interface 107 is a wired communication interface that is connected to the switch 31 with a cable. The communication interface 107 communicates with the login server 34, patching server 35, and nodes 41 to 45 via the switch 31. In this connection, the scheduler 100 may include a wireless communication interface that is connected to a wireless communication device such as a base station or an access point.

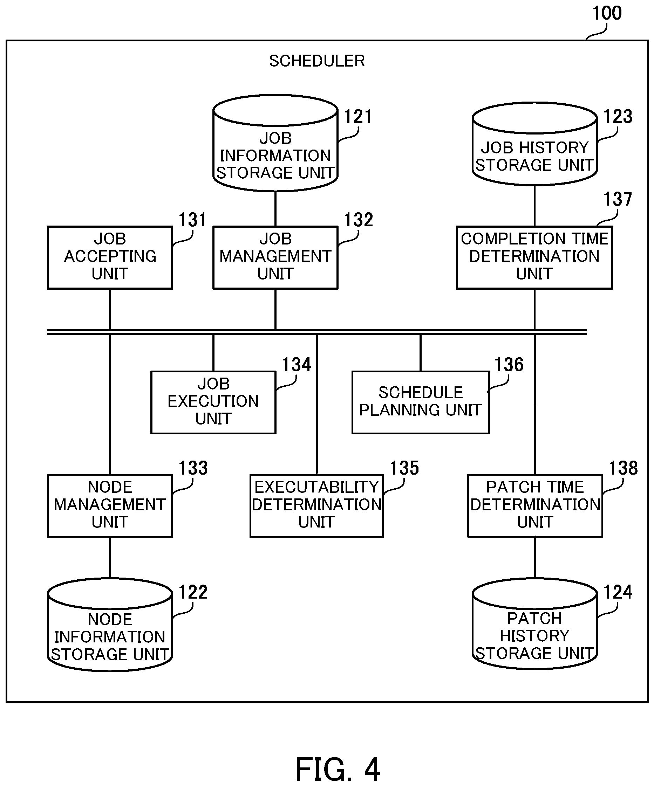

FIG. 4 is a block diagram illustrating an example of the functional configuration of the scheduler.

The scheduler 100 includes a job information storage unit 121, a node information storage unit 122, a job history storage unit 123, and a patch history storage unit 124. These storage units are implemented by using the RAM 102 or HDD 103, for example. In addition, the scheduler 100 includes a job accepting unit 131, a job management unit 132, a node management unit 133, a job execution unit 134, an executability determination unit 135, a schedule planning unit 136, a completion time determination unit 137, and a patch time determination unit 138. These processing units are implemented by using the CPU 101, communication interface 107, and programs.

The job information storage unit 121 stores information on execution waiting jobs and running jobs. The information on an execution waiting job includes a job type, the number of used nodes, and a processing time. The job type is either a patch job or a user job. The information on a running job includes a job type, the number of used nodes, a processing time, and a start time.

The node information storage unit 122 stores information indicating the current status of each node 41 to 45. The information on the current status includes the current version number of the OS. In addition, the information on the current status includes a flag indicating whether a node is available or not, and when the node is not available, also includes the job name of a job running on the node.

The job history storage unit 123 stores the execution history of user jobs. The execution history includes job property information such as a job name and a program size. The execution history also includes the measured value of the execution time of each user job. The patch history storage unit 124 stores the execution history of patch jobs. The execution history includes patch property information such as a version number and a patch type. For example, the patch type indicates the purpose of a patch such as a function addition, a security update, or a bug correction. The execution history also includes the measured value of the execution time of each patch job.

The job accepting unit 131 accepts a user job request from the login server 34. The job accepting unit 131 also accepts a patch job request from the patching server 35. The job accepting unit 131 outputs the received job requests to the job management unit 132.

The job management unit 132 manages information on execution waiting jobs and running jobs. The job management unit 132 obtains a job request from the job accepting unit 131 and registers a job based on the conditions specified by the job request at the end of the waiting job list. When the executability determination unit 135 determines that a job is executable, the job management unit 132 assigns the job to available nodes. The job management unit 132 then deletes the job from the waiting job list and manages it as a running job, as well as giving the job execution unit 134 an instruction to execute the job.

The node management unit 133 collects and manages information on the current status from each node 41 to 45. The node management unit 133 may be designed to periodically access the nodes 41 to 45 to actively collect the information. In addition, when any of the nodes 41 to 45 has started a new job or completed the execution of a running job, the node management unit 133 may passively receive the information from the node 41 to 45.

The job execution unit 134 causes the nodes 41 to 45 to execute jobs in response to instructions from the job management unit 132. More specifically, the job execution unit 134 gives a notification specifying the job name, program to be executed, and maximum execution time of a job to one or more nodes assigned to the job by the job management unit 132. The assigned nodes then activate the specified program. The assigned nodes complete the job when the program has halted or the maximum execution time has been reached.

The executability determination unit 135 determines whether an execution waiting job registered in the waiting job list is executable. With respect to a user job, the executability determination unit 135 determines that the user job is executable when the number of available nodes with the same version of the OS is greater than or equal to the specified number of used nodes. With respect to a patch job, the executability determination unit 135 determines that the patch job is executable when its patch application target node is available. Note, however, that the executability determination unit 135 may determine to temporarily delay an executable patch job, as will be described later.

The schedule planning unit 136 comprehensively creates a plurality of schedule candidates that each assign every single execution waiting job to nodes to be used and specify the start time of the execution waiting job. At this time, the schedule planning unit 136 allows a later-registered user job to be executed before an earlier-registered patch job. In the second embodiment, however, the schedule planning unit 136 does not perform backfilling of allowing a later-registered user job to be executed before an earlier-registered user job. In addition, the schedule planning unit 136 imposes a requirement that available nodes to be assigned to the same user job need to have the same version of the OS at the start time of the user job.

The schedule planning unit 136 selects a schedule with the minimum total waiting time of the user jobs from the plurality of schedule candidates. The total waiting time is the sum of the remaining waiting times from the current time to the start time of each user job. In the scheduling as described above, the schedule planning unit 136 determines when to execute the execution waiting patch jobs during the execution of the execution waiting user jobs. An execution waiting patch job may be executed before all the user jobs, may be executed after the execution of at least one of the user jobs, or may be delayed until all the user jobs are complete.

The completion time determination unit 137 determines the completion time of a running user job. In principle, the completion time determination unit 137 calculates the completion time by adding the maximum execution time to the start time. Note that the completion time determination unit 137 may estimate the execution time with reference to the execution history of past user jobs. For example, the completion time determination unit 137 estimates the execution time of the user job on the basis of the average execution time of past user jobs with similar job names.

In addition, for example, the completion time determination unit 137 estimates the execution time on the basis of the size of the user program. Alternatively, the completion time determination unit 137 may estimate the execution time by obtaining the progress of the user job from the nodes assigned to the user job. For example, the information on the progress includes the executed amount of the program and the processed amount of data.

The patch time determination unit 138 determines the processing time of the execution waiting patch jobs. If a patch for a certain version is not applied to any node, the patch time determination unit 138 estimates the processing time with reference to the execution history of past patch jobs. For example, the patch time determination unit 138 estimates the processing time of the patch jobs on the basis of the average execution time of past patch jobs with the same patch type as the patch jobs. If the patch for the certain version has been applied to at least one node, the patch time determination unit 138 uses the execution time of a past patch job done for the same version.

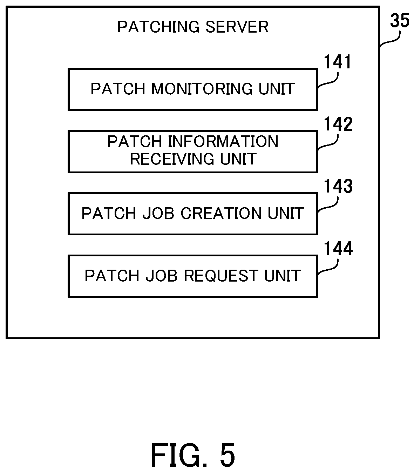

FIG. 5 is a block diagram illustrating an example of the functional configuration of a patching server.

The patching server 35 includes a patch monitoring unit 141, a patch information receiving unit 142, a patch job creation unit 143, and a patch job request unit 144. These processing units are implemented by using a CPU, a communication interface, and a program, for example.

The patch monitoring unit 141 periodically accesses the patch distribution server 33 to determine whether the patch distribution server 33 has begun to distribute a new patch.

When the patch monitoring unit 141 has detected the new patch, the patch information receiving unit 142 receives specification information from the patch distribution server 33. The patch information receiving unit 142 determines whether each of the nodes 41 to 45 satisfies the application requirements. The application requirements include a hardware requirement that a node needs to have specified hardware and a software requirement that the node needs to have a specified version of software.

With respect to each node satisfying the application requirements, the patch job creation unit 143 creates a patch job request to apply the new patch. The patch job request specifies a patch application target node and a patch itself. In this connection, the patch itself may be received by the patching server 35 or by individual nodes.

The patch job request unit 144 sends the patch job request created by the patch job creation unit 143 to the scheduler 100.

The following describes job scheduling.

In the case where the waiting job list contains both patch jobs and user jobs, the following three scheduling methods are considered. The first scheduling method executes the jobs in order of registration in the waiting job list, irrespective of their type being patch job or user job. The second scheduling method determines whether to execute or delay a patch job so as to reduce the waiting time of the user job next to the patch jobs. The third scheduling method determines until when each patch job is delayed so as to reduce the total waiting time of all user jobs waiting for execution at this point in time.

The first scheduling method may greatly increase the waiting times of the user jobs registered after the patch jobs due to the execution of the patch jobs. The second scheduling method may increase the average waiting time of the execution waiting user jobs because the reduction in the waiting time of the user job next to the patch jobs ends up increasing the waiting times of its subsequent user jobs. For this reason, the scheduler 100 of the second embodiment adopts the third scheduling method for the job scheduling.

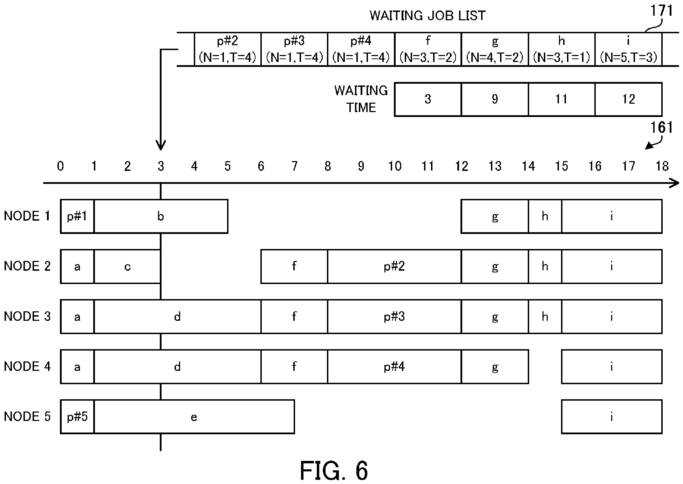

FIG. 6 illustrates a first job scheduling example.

A graph 161 represents a schedule planned with the above-described second scheduling method for a waiting job list 171. Time t3 denotes the current time. At time t3, the node 41 is executing a job b, the node 42 is available, the nodes 43 and 44 are executing a job d, and the node 45 is executing a job e. The job b is completed at time t5, the job d is completed at time t6, and the job e is completed at time t7. A patch has been applied to the nodes 41 and 45, but has not been applied to the nodes 42 to 44.

The waiting job list 171 contains jobs p#2, p#3, p#4, f, g, h, and i in that order. The job p#2 is a patch job for the node 42 and has the processing time of four. The job p#3 is a patch job for the node 43 and has the processing time of four. The job p#4 is a patch job for the node 44 and has the processing time of four. The job f is a user job that specifies that the number of used nodes is three and the maximum execution time is two. The job g is a user job that specifies that the number of used nodes is four and the maximum execution time is two. The job h is a user job that specifies that the number of used nodes is three and the maximum execution time is one. The job i is a user job that specifies that the number of used nodes is five and the maximum execution time is three.

With the second scheduling method, the scheduler 100 minimizes the waiting time of the job f. To this end, the scheduler 100 waits for the completion of the job d and assigns the job f to the nodes 42 to 44 at time t6 while delaying the job p#2. After the job f is completed at time t8, the scheduler 100 works on minimizing the waiting time of the job g. Since the number of nodes with the same version of the OS is less than four at this time, the scheduler 100 determines to execute the jobs p#2, p#3, and p#4.

After the jobs p#2, p#3, and p#4 are completed at time t12, the scheduler 100 assigns the job g to the nodes 41 to 44. After the job g is completed at time t14, the scheduler 100 assigns the job h to the nodes 41 to 43. After the job h is completed at time t15, the scheduler 100 assigns the job i to the nodes 41 to 45.

Taking the time t3 as the reference point, this schedule results in the waiting time of the job f being three, the waiting time of the job g being nine, the waiting time of the job h being 11, and the waiting time of the job i being 12. Therefore, the total waiting time of the execution waiting jobs f, g, h, and i is 35, and the average waiting time thereof is calculated as 35/4 = approximately 8.8.

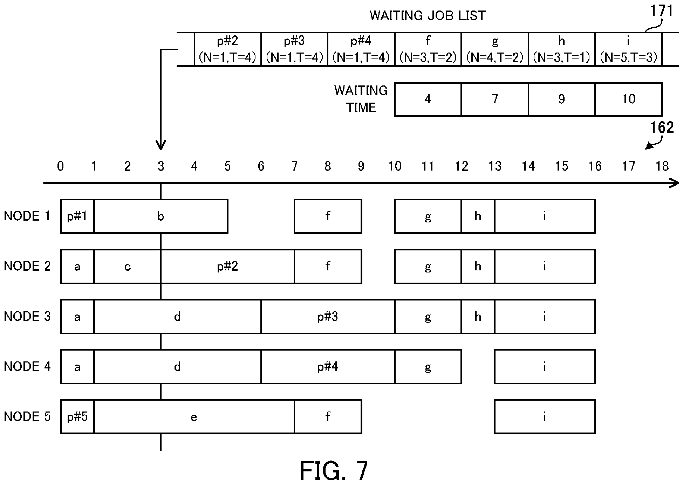

FIG. 7 illustrates a second job scheduling example.

A graph 162 represents a schedule planned with the above-described third scheduling method for the waiting job list 171. The scheduler 100 determines to execute the job p#2 at time t3. The scheduler 100 then determines to execute the jobs p#3 and p#4 after the job d is completed at time t6. After the jobs p#2 and e are completed at time t7, the scheduler 100 assigns the job f to the nodes 41, 42, and 45.

After the jobs p#3 and p#4 are completed at time t10, the nodes 41 to 45 have the same version of the OS. The scheduler 100 then assigns the job g to the nodes 41 to 44. After the job g is completed at time t12, the scheduler 100 assigns the job h to the nodes 41 to 43. After the job h is completed at time t13, the scheduler 100 assigns the job i to the nodes 41 to 45.

Taking the time t3 as the reference point, this schedule results in the waiting time of the job f being four, the waiting time of the job g being seven, the waiting time of the job h being nine, and the waiting time of the job i being ten. Therefore, the total waiting time of the execution waiting jobs f, g, h, and i is 30, and the average waiting time thereof is calculated as 30/4 = 7.5. As compared with the graph 161, the waiting time of the job f is long. However, the nodes 41 to 45 are able to have the same version of the OS early, which reduces the waiting times of the jobs g, h, and i, and accordingly reduces the average waiting time of the jobs f, g, h, and i.

The following describes how to plan a schedule represented by the graph 162.

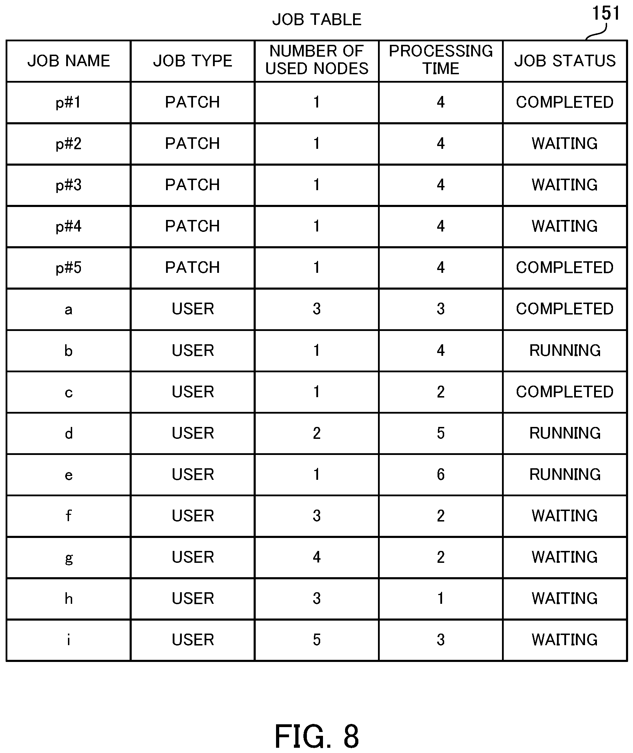

FIG. 8 illustrates an example of a job table.

The scheduler 100 stores a job table 151. The job table 151 has a plurality of records, each with the following items: job name, job type, the number of used nodes, processing time, and job status. One record corresponds to one job. The job name identifies a job. Patch jobs for different application target nodes are treated as different jobs. The job type is either a patch job or a user job.

The number of used nodes of a user job is specified by a user. The number of used nodes of a patch job is one. The processing time of the user job is either the maximum execution time specified by the user or an execution time estimated by the scheduler 100. The processing time of the patch job is either an execution time measured by applying the same patch on a node for the first time or an execution time measured by applying another similar patch in the past. The completion time of each job is estimated by adding its processing time to the start time of the job. The job status is one of waiting, running, and completed.

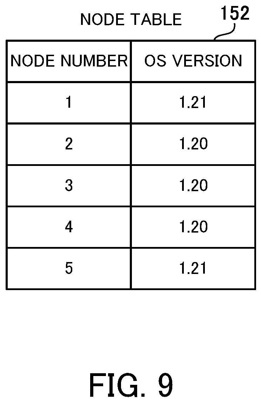

FIG. 9 illustrates an example of a node table.

The scheduler 100 stores a node table 152. The node table 152 has a plurality of records respectively corresponding to the nodes 41 to 45. Each record has the following items: node number and OS version. The node number identifies a node. The OS version indicates the version of an OS. When a patch is applied, the OS version is incremented. Therefore, the OS version of a node that has been patched is greater than that of a node that has not been patched.

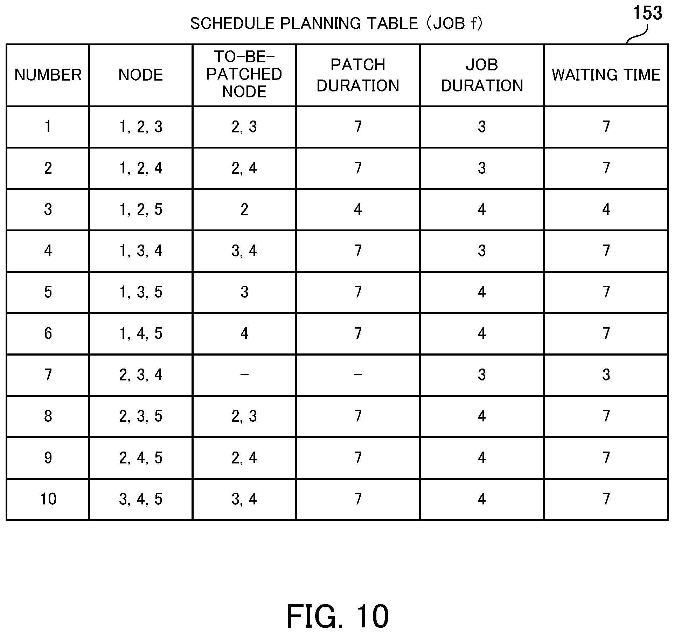

FIG. 10 illustrates an example of a schedule planning table for a first job.

First, the scheduler 100 schedules the job f that is a first user job. In doing so, the scheduler 100 comprehensively creates individual schedule candidates for the job f. An individual schedule is a schedule for a single job and forms part of a schedule planned for all execution waiting jobs. In this connection, with respect to the patch jobs p#2, p#3, and p#4, the scheduler 100 only needs to determine appropriate execution timing through the scheduling of the user jobs f, g, h, and i, and does not need to perform independent scheduling for them.

The scheduler 100 creates a schedule planning table 153. The schedule planning table 153 comprehensively contains individual schedule candidates that are executable plans of the job f. Since the job f specifies that the number of used nodes is three, ten individual schedule candidates are considered as a result of selecting three nodes from the nodes 41 to 45. The selected three nodes do not always have the same version of the OS. If the nodes do not have the same version of the OS and a patch job that results in aligning their versions of the OS is yet to be executed, the scheduler 100 creates an individual schedule candidate that executes the patch job before the job f.

Each individual schedule candidate has the following items: number, node, to-be-patched node, patch duration, job duration, and waiting time. The number identifies an individual schedule candidate. The node specifies one or more nodes to be assigned to the job in question (here, job f). The to-be-patched node specifies a node that needs to execute a patch job before the job in question among the one or more nodes to be assigned.

The patch duration is the length of time from the current time to a scheduled completion time at which the patch job for a to-be-patched node is scheduled to be completed. In the case where there are two or more to-be-patched nodes, the patch duration is calculated on the basis of the latest scheduled completion time. The job duration is the length of time from the current time to a scheduled completion time at which a running job is scheduled to be completed. In the case where different jobs are running on different nodes among the nodes to be assigned, the job duration is calculated on the basis of the latest scheduled completion time. The waiting time is the length of time from the current time to a possible start time of the job in question and is the patch duration or the job duration, whichever is greater.

After creating the schedule planning table 153, the scheduler 100 comprehensively creates individual schedule candidates for the next job g, on the premise of each of the ten individual schedule candidates contained in the schedule planning table 153.

Consider here the third individual schedule candidate and the seventh individual schedule candidate. The third individual schedule candidate is to cause the node 42 to execute the job p#2 and assign the job f to the nodes 41, 42, and 45. In this case, the waiting time of the job f is four. The seventh individual schedule candidate, on the other hand, assigns the job f to the nodes 42 to 44. The jobs p#2, p#3, and p#4 are not executed before the job f. In this case, the waiting time of the job f is three, less than that of the third individual schedule candidate.

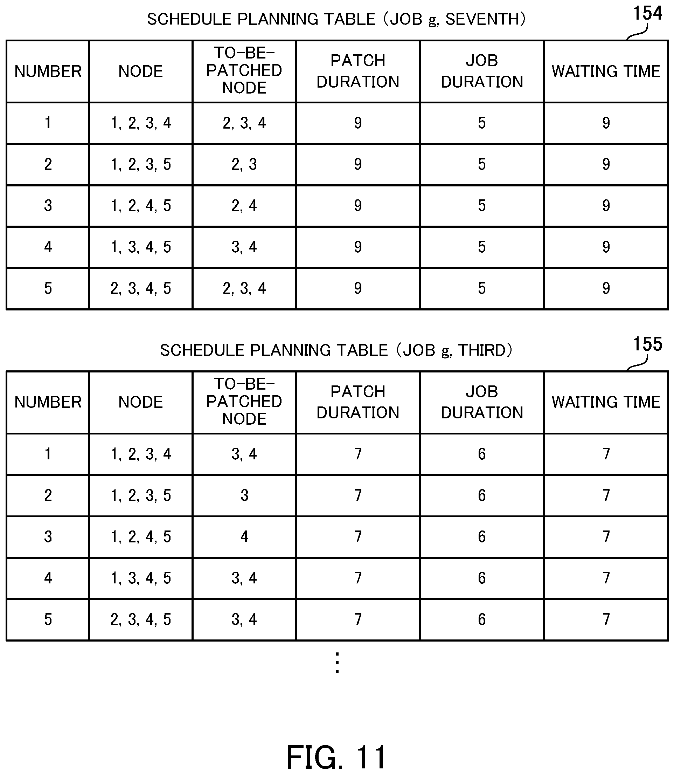

FIG. 11 illustrates examples of the schedule planning table for a subsequent job.

The scheduler 100 creates a schedule planning table 154. The schedule planning table 154 comprehensively contains individual schedule candidates that are executable plans of the job g, on the premise that the job f is executed according to the seventh individual schedule candidate.

Since the job g specifies that the number of used nodes is four, five individual schedule candidates are considered as a result of selecting four nodes from the nodes 41 to 45. In this case, the patch has been applied to the nodes 41 and 45, but has not been applied the nodes 42 to 44. Therefore, all the five individual schedule candidates have to-be-patched nodes. As a result, all the individual schedule candidates have a patch duration of nine and a waiting time of nine.

In addition, the scheduler 100 creates a schedule planning table 155. The schedule planning table 155 comprehensively contains individual schedule candidates that are executable plans of the job g, on the premise that the job f is executed according to the third individual schedule candidate. In this case, the patch has been applied to the nodes 41, 42, and 45, but has not been applied to the nodes 43 and 44. Therefore, all the five individual schedule candidates have to-be-patched nodes. As a result, all the individual schedule candidates have a patch duration of seven and a waiting time of seven.

As seen from the above, in view of the waiting time of the job f, the seventh individual schedule candidate is more advantageous than the third individual schedule candidate. In view of the waiting time of the job g, on the other hand, the selection of the third individual schedule candidate for the job f is more advantageous than that of the seventh individual schedule candidate. Therefore, from the standpoint of the execution waiting user jobs as a whole, selecting the seventh individual schedule candidate for the job f is not necessarily a better choice.

Similarly, the scheduler 100 comprehensively creates individual schedule candidates for the job h, on the premise of each of the individual schedule candidates created for the job g. Since the job h specifies that the number of used nodes is three, ten individual schedule candidates are considered as a result of selecting three nodes from the nodes 41 to 45. Then, the scheduler 100 comprehensively creates individual schedule candidates for the job i, on the premise of each of the individual schedule candidates for the job h. Since the job i specifies that the number of used nodes is five, one individual schedule candidate is considered as a result of selecting five nodes from the nodes 41 to 45.

The scheduler 100 calculates the total waiting time of the jobs f, g, h, and i with respect to each schedule candidate that is a combination of the individual schedule candidates created for the jobs f, g, h, and i. The plurality of schedule candidates may be found using a tree structure. The scheduler 100 selects a schedule with the minimum total waiting time from the plurality of schedule candidates. If there is a patch job whose start time is yet to be determined, the scheduler 100 may place the patch job after the job i. Alternatively, the scheduler 100 may insert the patch job in an idle time during the execution of the jobs f, g, h, and i if the insertion does not cause any discrepancy in the version of the OS for the subsequent jobs.

The scheduler 100 controls the execution of the jobs p#2, p#3, p#4, f, g, h, and i according to the selected schedule. For example, the scheduler 100 causes the node 42 to execute the job p#2 at time t3. The selected schedule is used until the scheduler 100 performs re-scheduling. For example, the scheduler 100 performs the re-scheduling when a new job is registered in the waiting job list 171 or when a running job is completed.

The following describes scheduling examples different from those of FIGS. 6 and 7. The following description involves comparing the results of the above-described first scheduling method, second scheduling method, and third scheduling method.

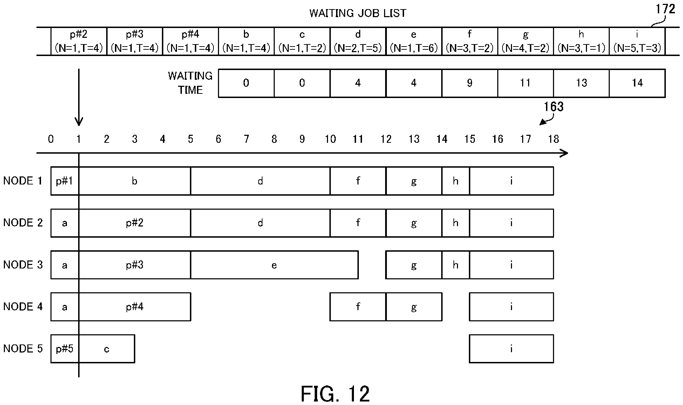

FIG. 12 illustrates a third job scheduling example.

A graph 163 represents a schedule planned with the above-described first scheduling method for a waiting job list 172. Time t1 denotes the current time. At time t1, the nodes 41 to 45 are available. A patch has been applied to the nodes 41 and 45, but has not been applied to the nodes 42 to 44.

The waiting job list 172 contains jobs p#2, p#3, p#4, b, c, d, e, f, g, h, and i in that order. The job p#2 is a patch job for the node 42 and has the processing time of four. The job p#3 is a patch job for the node 43 and has the processing time of four. The job p#4 is a patch job for the node 44 and has the processing time of four.

The job b is a user job that specifies that the number of used nodes is one and the maximum execution time is four. The job c is a user job that specifies that the number of used nodes is one and the maximum execution time is two. The job d is a user job that specifies that the number of used nodes is two and the maximum execution time is five. The job e is a user job that specifies that the number of used nodes is one and the maximum execution time is six. The job f is a user job that specifies that the number of used nodes is three and the maximum execution time is two. The job g is a user job that specifies that the number of used nodes is four and the maximum execution time is two. The job h is a user job that specifies that the number of used nodes is three and the maximum execution time is one. The job i is a user job that specifies that the number of used nodes is five and the maximum execution time is three.

The first scheduling method executes jobs p#2, p#3, p#4, b, c, d, e, f, g, h, and i in order of registration, irrespective of their type being patch job or user job. The scheduler 100 causes the nodes 42 to 44 to execute the jobs p#2, p#3, and p#4 at time t1. In addition, the scheduler 100 assigns the job b to the node 41 and the job c to the node 45.

After the jobs p#2, p#3, p#4, and b are completed at time t5, the scheduler 100 assigns the job d to the nodes 41 and 42 and the job e to the node 43. After the job d is completed at time t10, the scheduler 100 assigns the job f to the nodes 41, 42, and 44. After the job f is completed at time t12, the scheduler 100 assigns the job g to the nodes 41 to 44. After the job g is completed at time t14, the scheduler 100 assigns the job h to the nodes 41 to 43. After the job h is completed at time t15, the scheduler 100 assigns the job i to the nodes 41 to 45.

Taking the time t1 as the reference point, this schedule results in the waiting times of the jobs b and c being zero. In addition, the waiting time of the job d is four, the waiting time of the job e is four, the waiting time of the job f is nine, the waiting time of the job g is 11, the waiting time of the job h is 13, and the waiting time of the job i is 14. Therefore, the total waiting time of the execution waiting jobs b, c, d, e, f, g, h, and i is 55, and the average waiting time thereof is calculated as 55/8 = approximately 6.9.

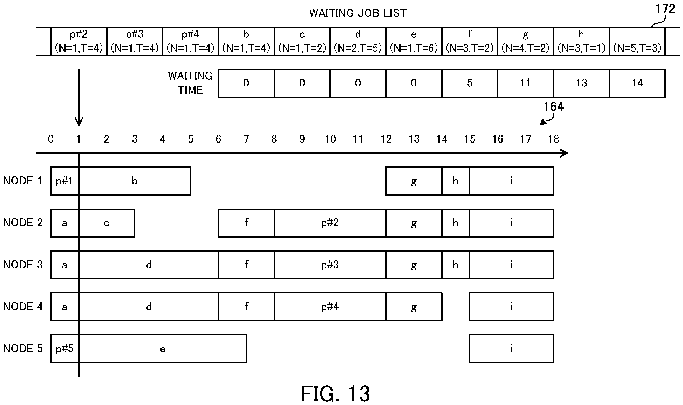

FIG. 13 illustrates a fourth job scheduling example.

A graph 164 represents a schedule planned with the above-described second scheduling method for the waiting job list 172. At time t1, the scheduler 100 assigns the job b to the node 41, the job c to the node 42, the job d to the nodes 43 and 44, and job e to the node 45. Since the jobs b, c, d, and e are executable immediately, the scheduler 100 delays the jobs p#2, p#3, and p#4.

After the job d is completed at time t6, the scheduler 100 assigns the job f to the nodes 42 to 44. After the job f is completed at time t8, the scheduler 100 causes the nodes 42 to 44 to execute the jobs p#2, p#3, and p#4 since there are only three nodes with the same version of the OS. After the jobs p#2, p#3, and p#4 are completed at time t12, the scheduler 100 assigns the job g to the nodes 41 to 44.

After the job g is completed at time t14, the scheduler 100 assigns the job h to the nodes 41 to 43. After the job h is completed at time t15, the scheduler 100 assigns the job i to the nodes 41 to 45. In this connection, the graph 164 corresponds to the schedule represented by the graph 161 of FIG. 6 starting at time t1.

Taking the time t1 as the reference point, this schedule results in the waiting times of the jobs b, c, d, and e being zero. In addition, the waiting time of the job f is five, the waiting time of the job g is 11, the waiting time of the job h is 13, and the waiting time of the job i is 14. Therefore, the total waiting time of the execution waiting jobs b, c, d, e, f, g, h, and i is 43, and the average waiting time thereof is calculated as 43/8 = approximately 5.4.

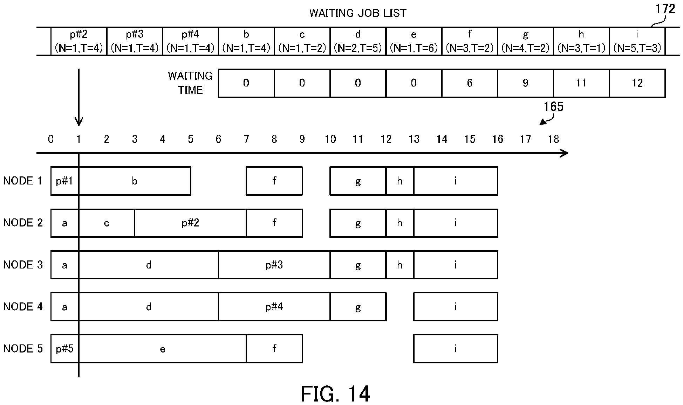

FIG. 14 illustrates a fifth job scheduling example.

A graph 165 represents a schedule planned with the above-described third scheduling method for the waiting job list 172. At time t1, the scheduler 100 assigns the job b to the node 41, the job c to the node 42, the job d to the nodes 43 and 44, and job e to the node 45.

After the job c is completed at time t3, the scheduler 100 causes the node 42 to execute the job p#2. After the job d is completed at time t6, the scheduler 100 causes the nodes 43 and 44 to execute the job p#3 and p#4. After the jobs p#2 and e are completed at time t7, the scheduler 100 assigns the job f to the nodes 41, 42, and 45.

After the jobs p#3 and p#4 are completed at time t10, the scheduler 100 assigns the job g to the nodes 41 to 44. After the job g is completed at time t12, the scheduler 100 assigns the job h to the nodes 41 to 43. After the job h is completed at time t13, the scheduler 100 assigns the job i to the nodes 41 to 45. In this connection, the graph 165 corresponds to the schedule represented by the graph 162 of FIG. 7 starting at time t1.

Taking the time t1 as the reference point, this schedule results in the waiting times of the jobs b, c, d, and e being zero. In addition, the waiting time of the job f is six, the waiting time of the job g is nine, the waiting time of the job h is 11, and the waiting time of the job i is 12. Therefore, the total waiting time of the execution waiting jobs b, c, d, e, f, g, h, and i is 38, and the average waiting time thereof is calculated as 38/8 = approximately 4.8. The schedule represented by the graph 165 provides a shorter average waiting time than those represented by the graphs 163 and 164.

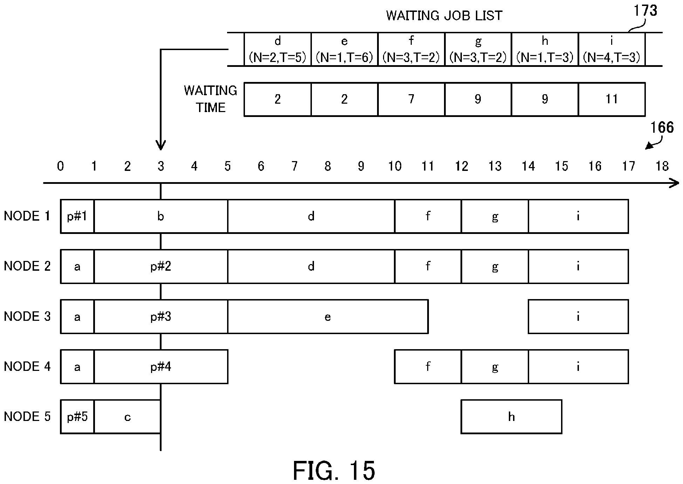

FIG. 15 illustrates a sixth job scheduling example.

A graph 166 represents a schedule planned with the above-described first scheduling method for a waiting job list 173. Time t3 denotes the current time. At time t3, the node 41 is executing a job b, the node 42 is executing a job p#2, the node 43 is executing a job p#3, the node 44 is executing a job p#4, and the node 45 is available. The jobs b, p#2, p#3, and p#4 are completed at time t5. A patch has been applied to the nodes 41 and 45, and is currently applied to the nodes 42 to 44.

A waiting job list 173 contains jobs d, e, f, g, h, and i in that order. The job d is a user job that specifies that the number of used nodes is two and the maximum execution time is five. The job e is a user job that specifies that the number of used nodes is one and the maximum execution time is six. The job f is a user job that specifies that the number of used nodes is three and the maximum execution time is two. The job g is a user job that specifies that the number of used nodes is three and the maximum execution time is two. The job h is a user job that specifies that the number of used nodes is one and the maximum execution time is three. The job i is a user job that specifies that the number of used nodes is four and the maximum execution time is three.

At time t3, there is a lack of available nodes to execute the job d. After the jobs b, p#2, p#3, and p#4 are completed at time t5, the scheduler 100 assigns the job d to the nodes 41 and 42 and the job e to the node 43. After the job d is completed at time t10, the scheduler 100 assigns the job f to the nodes 41, 42, and 44. After the job f is completed at time t12, the scheduler 100 assigns the job g to the nodes 41, 42, and 44 and the job h to the node 45. After the job g is completed at time t14, the scheduler 100 assigns the job i to the nodes 41 to 44.

Taking the time t3 as the reference point, this schedule results in the waiting time of the job d being two, the waiting time of the job e being two, the waiting time of the job f being seven, the waiting time of the job g being nine, the waiting time of the job h being nine, and the waiting time of the job i being 11. Therefore, the total waiting time of the execution waiting jobs d, e, f, g, h, and i is 40, and the average waiting time thereof is calculated as 40/6 = approximately 6.7.

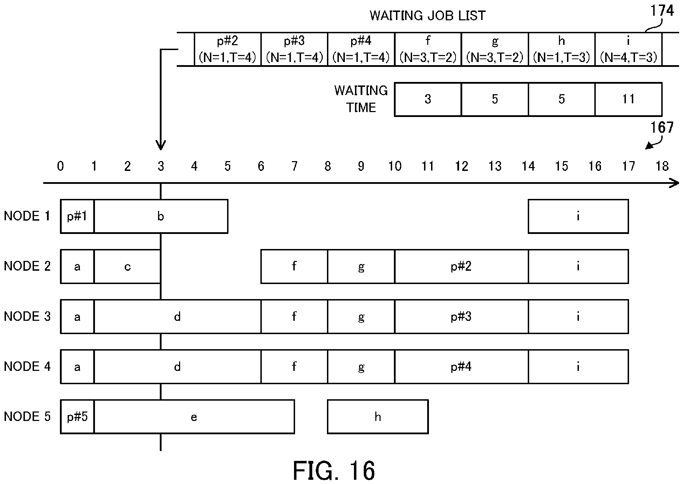

FIG. 16 illustrates a seventh job scheduling example.

A graph 167 represents a schedule planned with the above-described second scheduling method for a waiting job list 174. Time t3 denotes the current time. Since the different scheduling method is used, the status of the nodes 41 to 45 at time t3 is different from that represented in the graph 166.

At time t3, the node 41 is executing the job b, the node 42 is available, the nodes 43 and 44 are executing the job d, and the node 45 is executing the job e. The job b is completed at time t5, the job d is completed at time t6, and the job e is completed at time t7. The patch has been applied to the nodes 41 and 45, but has not been applied to the nodes 42 to 44. The waiting job list 174 contains the jobs p#2, p#3, p#4, f, g, h, and i in that order. The details of the jobs b, c, d, e, f, g, h, i are the same as those seen in FIG. 15.

At time t3, the scheduler 100 determines to delay the job p#2 in order to execute the job f early. After the job d is completed at time t6, the scheduler 100 assigns the job f to the nodes 42 to 44. After the job f is completed at time t8, the scheduler 100 assigns the job g to the nodes 42 to 44 and the job h to the node 45.

After the job g is completed at time t10, the scheduler 100 causes the nodes 42 to 44 to execute the jobs p#2, p#3, and p#4. After the jobs p#2, p#3, and p#4 are completed at time t14, the scheduler 100 assigns the job i to the nodes 41 to 44.

Taking the time t3 as the reference point, this schedule results in the waiting time of the job f being three, the waiting time of the job g being five, the waiting time of the job h being five, and the waiting time of the job i being 11. Therefore, the total waiting time of the execution waiting jobs f, g, h, and i is 24, and the average waiting time thereof is calculated as 24/6 = 4.

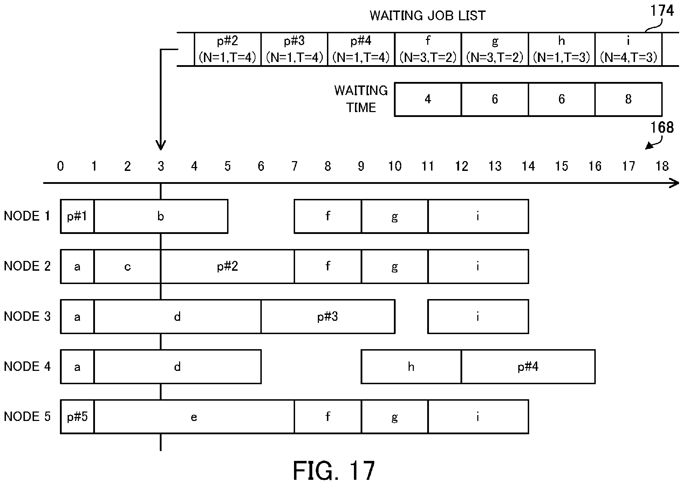

FIG. 17 illustrates an eighth job scheduling example.

A graph 168 represents a schedule planned with the above-described third scheduling method for the waiting job list 174. At time t3, the scheduler 100 causes the node 42 to execute the job p#2. After the job d is completed at time t6, the scheduler 100 causes the node 43 to execute the job p#3.

After the jobs p#2 and e are completed at time t7, the scheduler 100 assigns the job f to the nodes 41, 42, and 45. After the job f is completed at time t9, the scheduler 100 assigns the job g to the nodes 41, 42, and 45 and the job h to the node 44. After the job g is completed at time t11, the scheduler 100 assigns the job i to the nodes 41 to 43 and 45. After the job h is completed at time t12, the scheduler 100 assigns the node 44 to the job p#4.

Taking the time t3 as the reference point, this schedule results in the waiting time of the job f being four, the waiting time of the job g being six, the waiting time of the job h being six, and the waiting time of the job i being eight. Therefore, the total waiting time of the execution waiting jobs f, g, h, and i is 24, and the average waiting time thereof is calculated as 24/6 = 4. As seen as above, the schedule represented by the graph 168 provides a shorter average waiting time than that represented by the graph 166 and the same average waiting time as that represented by the graph 167. In addition, the completion time of the job i, which is the last user job, is earlier than that indicated in the graph 167.

The following describes how the information processing system operates.

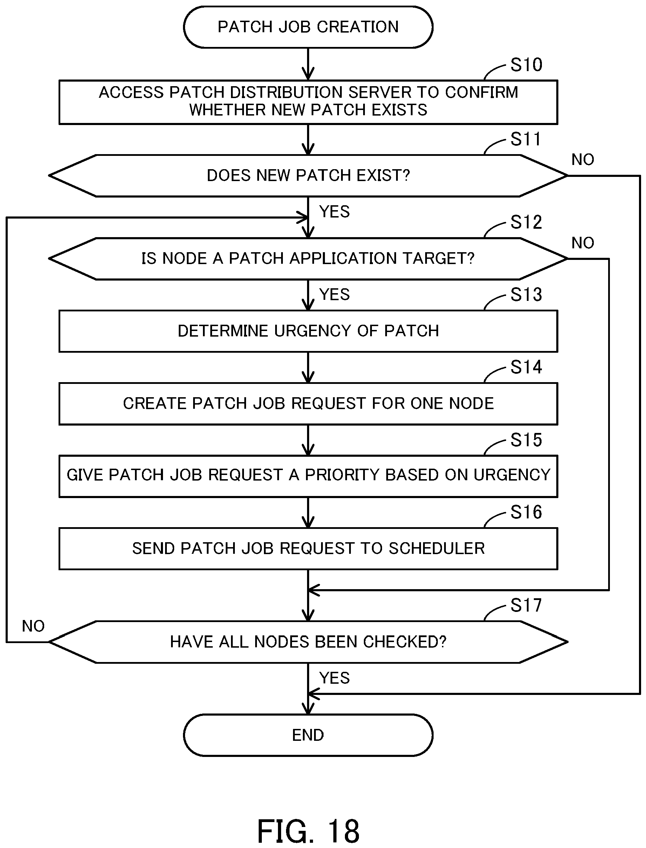

FIG. 18 is a flowchart illustrating an example procedure for patch job creation.

S10: The patch monitoring unit 141 accesses the patch distribution server 33 to confirm whether the patch distribution server 33 has begun to distribute a new patch.

S11: The patch monitoring unit 141 determines whether a new patch exists. If the new patch exists, the process proceeds to step S12; otherwise, the process is completed.

S12: The patch information receiving unit 142 receives specification information on the new patch. The patch information receiving unit 142 selects one node. The patch information receiving unit 142 determines whether the selected node is a patch application target. If the selected node is a patch application target, the process proceeds to step S13; otherwise, the process proceeds to step S17.

S13: The patch job creation unit 143 determines the urgency of the patch on the basis of the specification information.

S14: The patch job creation unit 143 creates a patch job request for updating the OS of the node selected at step S12. The patch job request specifies the patch application target node and an update program to be executed.

S15: The patch job creation unit 143 gives the patch job request a priority based on the urgency determined at step S13. For example, in the case where the urgency of the patch is determined to be high, the patch job creation unit 143 gives the patch job request a priority indicating a high level of urgency. In the case where the urgency of the patch is determined to be medium or low, the patch job creation unit 143 gives the patch job request a priority indicating a normal level of urgency.

S16: The patch job request unit 144 sends the patch job request created through steps S13 to 15 to the scheduler 100.

S17: The patch information receiving unit 142 determines whether all nodes have been checked at step S12. If all nodes have been checked, the process is completed; otherwise, the process proceeds back to step S12 to select another node.

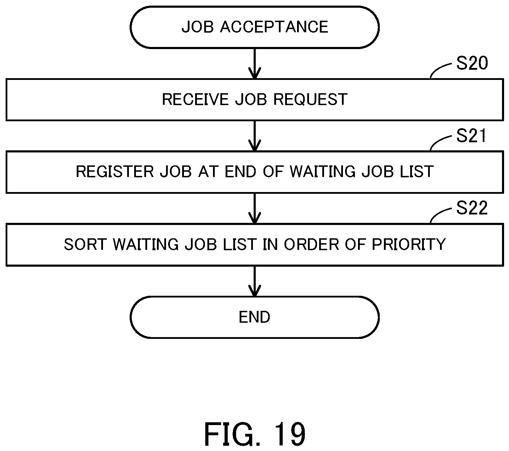

FIG. 19 is a flowchart illustrating an example procedure for job acceptance.

S20: The job accepting unit 131 receives a job request. The received job request is either a patch job request as described above or a user job request from the login server 34. The user job request specifies a user program, the number of used nodes, and a maximum execution time.

S21: The job management unit 132 registers a job specified by the job request received at step S20 at the end of a waiting job list.

S22: The job management unit 132 sorts the jobs registered in the waiting job list in descending order of priority. In the waiting job list, jobs with high levels of urgency are arranged before jobs with normal levels of urgency. Jobs with the same priority are arranged in order of registration.

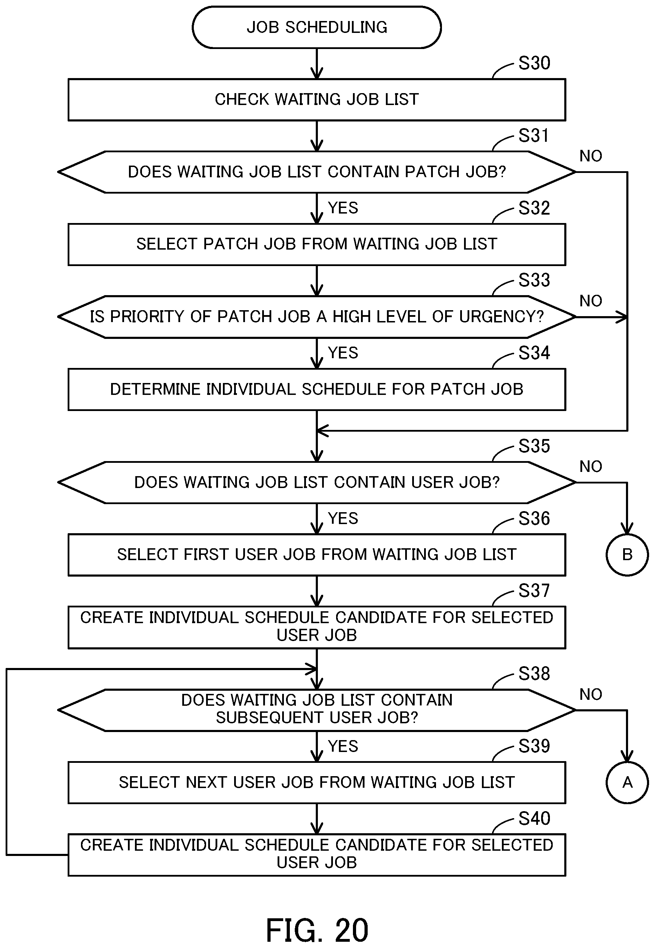

FIG. 20 is a flowchart illustrating an example procedure for job scheduling.

For example, this job scheduling is triggered by a new job being added to a waiting job list or by any of running jobs being completed.

S30: The schedule planning unit 136 checks the waiting job list.

S31: The schedule planning unit 136 determines whether the waiting job list contains a patch job. If the waiting job list contains a patch job, the process proceeds to step S32; otherwise, the process proceeds to step S35.

(S32) The schedule planning unit 136 selects all patch jobs from the waiting job list. The following steps S33 and S34 are executed on each patch job.

(S33) The schedule planning unit 136 determines whether the priority of a patch job is a high level of urgency. If the priority is a high level of urgency, the process proceeds to step S34; if the priority is a normal level of urgency, the process proceeds to step S35.

(S34) The schedule planning unit 136 determines an individual schedule for each patch job whose priority is a high level of urgency, prior to the user jobs and the other patch jobs. This individual schedule specifies the earliest time at which the patch application target node becomes available next time, as a start time. This allows the patch job to be executed at the earliest possible time.

S35: The schedule planning unit 136 determines whether the waiting job list contains a user job. If the waiting job list contains a user job, the process proceeds to step S36; otherwise, the process proceeds to step S43.

S36: The schedule planning unit 136 selects a first user job from the waiting job list. The first user job is a user job that is placed closest to the top of the waiting job list among the user jobs, i.e., a user job registered earliest in the waiting job list.

S37: The schedule planning unit 136 creates individual schedule candidates for the selected user job. Here, the schedule planning unit 136 comprehensively creates patterns that select as many nodes as the specified number of used nodes, with the method described with reference to FIG. 10. Each individual schedule candidate specifies nodes to be assigned to the user job and the start time. In the case where an individual schedule for any patch job is first determined at step S34, the schedule planning unit 136 creates the individual schedule candidates for the user job so as not to cause any conflict with the already-determined individual schedule. An individual schedule candidate may execute a patch job first so as to align the versions of the OS.

(S38) The schedule planning unit 136 determines whether the waiting job list contains a user job subsequent to the currently selected user job. If the waiting job list contains a subsequent user job, the process proceeds to step S39; if the waiting job list does not contain any subsequent user job, the process proceeds to step S41. The latter case is a case where the currently selected user job is a user job placed at the end.

(S39) The schedule planning unit 136 selects a next user job from the waiting job list. The next user job is a user job registered immediately after the currently selected user job in the waiting job list.

(S40) The schedule planning unit 136 creates individual schedule candidates for the user job selected at step S39. Here, the schedule planning unit 136 comprehensively creates patterns that select as many nodes as the specified number of used nodes, with the method described with reference to FIG. 11, for each individual schedule candidate created for the previous user job. An individual schedule candidate may execute a patch job first in order to align the versions of the OS. Then, the process proceeds to step S38.

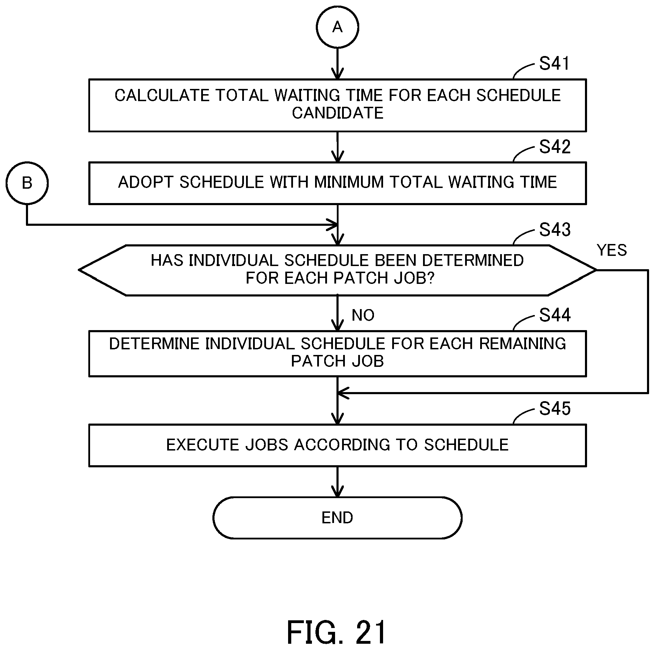

FIG. 21 is a continuation of the flowchart illustrating the example procedure for the job scheduling.

S41: The schedule planning unit 136 creates schedule candidates each combining one individual schedule candidate for each individual user job, after individually creating the individual schedule candidates for all user jobs in order from the first to the last user jobs. The schedule planning unit 136 calculates the total waiting time of the user jobs for each of the plurality of schedule candidates.

S42: The schedule planning unit 136 adopts a schedule with the minimum total waiting time among the plurality of schedule candidates.

S43: The schedule planning unit 136 determines from the schedule adopted at step S42 whether an individual schedule has been determined for each patch job contained in the waiting job list. The individual schedule for a patch job may be determined at step S34 or in the course of step S37 or S40. If the individual schedules have been determined for all patch jobs, the process proceeds to step S45. If there is a patch job for which an individual schedule is yet to be determined, the process proceeds to step S44.

S44: The schedule planning unit 136 determines an individual schedule for each remaining patch job for which the individual schedule is yet to be determined. At this time, the schedule planning unit 136 determines whether there is an idle time long enough to execute a remaining patch job between user jobs. If such an idle time is found and the execution of a patch job in the idle time does not cause any discrepancy in the version of the OS for the subsequent user jobs, the schedule planning unit 136 places the patch job in the idle time. Otherwise, the schedule planning unit 136 places the patch job after a user job that is executed last on the patch application target node of the patch job.

S45: The executability determination unit 135 causes the nodes 41 to 45 to execute the patch jobs and user jobs according to the schedule determined through steps S42 to S44. A job is assigned to nodes on the basis of the number of used nodes and start time specified by the schedule. This schedule is used until the schedule is updated by any of the aforementioned occasions.

In this connection, the scheduler 100 may output the determined schedule. The scheduler 100 may store the determined schedule in a non-volatile storage device, display it on the display device 111, or send it to another information processing apparatus.

As described above, the scheduler 100 of the second embodiment allows patch jobs to be executed on nodes at different start times, without executing the patch jobs on all nodes simultaneously. This allows an administrator to operate the information processing system without interruption, which improves the availability of the information processing system. In addition, the scheduler 100 assigns a user job that uses two or more nodes to nodes with the same version of the OS. This mitigates errors and unexpected behaviors caused by version discrepancies.

Furthermore, even if a patch job placed at the top of the waiting job list is executable and a subsequent user job is not yet executable, the scheduler 100 may determine to delay the patch job and wait until the user job becomes executable. This reduces the risk of a significant increase in the waiting time of the user job caused due to the execution of the patch job.

Still further, the scheduler 100 plans a schedule that minimizes the total waiting time of a plurality of user jobs, and determines when to execute patch jobs. This approach achieves overall optimization and a reduction in the average waiting time of the user jobs, as compared to the case of focusing solely on the waiting time of a user job immediately after the patch jobs. The approach also reduces the risk that reducing the waiting time of at least one user job ends up increasing the waiting times of other user jobs, and thus improves the fairness in the waiting times among the plurality of user jobs. Furthermore, the scheduler 100 comprehensively plans executable schedule candidates by linking together individual schedule candidates created for the individual user jobs in the order of the user jobs on the waiting job list. This enables precise determination of a schedule that minimizes the total waiting time.

According to one aspect, the waiting times of user jobs are reduced.

## Claims

1. A computer program that causes a computer to perform a process comprising:
identifying, in a plurality of execution waiting jobs, an update job (13, 14) of updating a control software of a target node among a plurality of nodes and two or more user jobs (15, 16) each with specification of a number of used nodes and an expected execution time, the number of used nodes indicating how many nodes are used among the plurality of nodes;
planning a schedule (17, 18) of the update job and the two or more user jobs so as to reduce a total waiting time of the two or more user jobs, based on the number of used nodes and the expected execution time in such a manner that each of the two or more user jobs is assigned to one or more nodes that are available and have an identical version of the control software among the plurality of nodes; and
controlling an order of execution of the update job and the two or more user jobs according to the planned schedule.

2. The computer program according to claim 1, wherein the update job (p#2) is placed at a top of an execution waiting queue (171) containing the plurality of execution waiting jobs, and the two or more user jobs (f, g) are placed after the update job in the execution waiting queue.

3. The computer program according to claim 1 or claim 2, wherein the schedule is selected from a plurality of schedules including a first schedule (162) that executes the update job earlier than the two or more user jobs and a second schedule (165) that executes at least one of the two or more user jobs earlier than the update job.

4. The computer program according to any of claims 1 to 3, wherein the planning includes
computing a plurality of first patterns (153) that each assign a first user job among the two or more user jobs to as many nodes with the identical version as the number of used nodes of the first user job, and
computing, for each of the plurality of first patterns, a second pattern (154, 155) that assigns a second user job among the two or more user jobs to as many nodes with the identical version as the number of used nodes of the second user job.

5. A job scheduling method executed by a computer, the job scheduling method comprising:
identifying, in a plurality of execution waiting jobs, an update job (13, 14) of updating a control software of a target node among a plurality of nodes and two or more user jobs (15, 16) each with specification of a number of used nodes and an expected execution time, the number of used nodes indicating how many nodes are used among the plurality of nodes;
planning a schedule (17, 18) of the update job and the two or more user jobs so as to reduce a total waiting time of the two or more user jobs, based on the number of used nodes and the expected execution time in such a manner that each of the two or more user jobs is assigned to one or more nodes that are available and have an identical version of the control software among the plurality of nodes; and
controlling an order of execution of the update job and the two or more user jobs according to the planned schedule.

6. An information processing apparatus comprising:
storage means (11) for storing job information indicating a plurality of execution waiting jobs, the plurality of execution waiting jobs including an update job (13, 14) of updating a control software of a target node among a plurality of nodes and two or more user jobs (15, 16) each with specification of a number of used nodes and an expected execution time, the number of used nodes indicating how many nodes are used among the plurality of nodes; and
processing means (12) for planning a schedule (17, 18) of the update job and the two or more user jobs so as to reduce a total waiting time of the two or more user jobs, based on the number of used nodes and the expected execution time in such a manner that each of the two or more user jobs is assigned to one or more nodes that are available and have an identical version of the control software among the plurality of nodes, and controlling an order of execution of the update job and the two or more user jobs according to the planned schedule.
